# EUROPÄISCHE PATENTSCHRIFT

(11) **EP 3 028 538 B1**
(45) Veröffentlichungstag und Bekanntmachung des Hinweises auf die Patenterteilung: **22.05.2024**
(21) Anmeldenummer: 14767121.8
(22) Anmeldetag: 24.07.2014
(51) Int. Cl.: H05B 6/12

(54) **KOCHFELDVORRICHTUNG**
STOVE TOP DEVICE
SYSTÈME DE TABLE DE CUISSON

(30) Priorität: 02.08.2013 ES 201331223
(43) Veröffentlichungstag der Anmeldung: 08.06.2016
(73) Patentinhaber: BSH Hausgeräte GmbH, 81739 München (DE)
(72) Erfinder: GARDE ARANDA, Ignacio, E-50012 Zaragoza (ES); GRACIA CAMPOS, Oscar, E-50008 Zaragoza (ES); MURESAN, Paul, E-50720 La Cartuja (ES); PALACIOS TOMAS, Daniel, E-50008 Zaragoza (ES); VILLANUEVA VALERO, Beatriz, E-44500 Andorra Teruel (ES)
(86) Internationale Anmeldenummer: PCT/IB2014/063373
(87) Internationale Veröffentlichungsnummer: WO 2015/015373

(56) Entgegenhaltungen:
- EP-A1- 2 509 392
- EP-A2- 2 506 668
- EP-A2- 2 506 675
- WO-A1-2011/067708

## Beschreibung

Die Erfindung geht aus von einer Kochfeldvorrichtung nach dem Oberbegriff des Anspruchs 1.

Aus der Druckschrift EP 2 506 675 A2 ist bereits eine Kochfeldvorrichtung, und zwar eine Induktionskochfeldvorrichtung, mit einem variablen Kochflächenbereich, der durch eine Anordnung von zumindest zwei länglichen Heizelementen festgelegt ist, die bezüglich einer Längsachse der Heizelemente benachbart angeordnet sind, vorgeschlagen worden.

Ferner ist aus der Druckschriften EP 2 509 392 A1 ein Induktionsherd mit einem Steuerverfahren bekannt, das die Leistung einer Kochspule stabil einstellt, wenn eine Vielzahl von Behältern mit unterschiedlichen Kochbedingungen auf der Kochspule platziert wird, wobei eine Vielzahl von Heizelementen unter einer Kochplatte angeordnet sind.

Außerdem offenbart die Druckschrift EP 2 506 668 A2 ein Steuerverfahren eines Induktionskochers, welches das Erfassen mindestens eines von einem ersten Behälter belegten Heizelements aus einer Vielzahl von Heizelementen und das Schalten einer Vielzahl von Wechselrichtereinheiten umfasst.

Die Aufgabe der Erfindung besteht insbesondere darin, eine gattungsgemäße Vorrichtung mit verbesserten Eigenschaften hinsichtlich geringer Kosten und/oder einer hohen Flexibilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung, insbesondere einer Induktionskochfeldvorrichtung, mit zumindest einem variablen Kochflächenbereich, der durch eine Anordnung von zumindest zwei, insbesondere zumindest drei, vorteilhaft zumindest vier länglichen Heizelementen festgelegt, insbesondere definiert und/oder ausgestaltet, ist, die bezüglich zumindest einer Längsachse der Heizelemente benachbart angeordnet sind und mit zumindest einer weiteren länglichen Heizeinheit, deren Längsachse zumindest im Wesentlichen senkrecht zu den Längsachsen der Heizelemente ausgerichtet ist, wobei die weitere Heizeinheit von genau einem Heizelement gebildet ist, wobei ein Schwerpunkt der weiteren Heizeinheit bezüglich der Längsachse der weiteren Heizeinheit zumindest im Wesentlichen mittig zwischen Schwerpunkten von zwei benachbart angeordneten Heizelementen des variablen Kochflächenbereichs oder zumindest im Wesentlichen auf einer der Längsachsen eines der Heizelemente des variablen Kochflächenbereichs angeordnet ist.

Es wird vorgeschlagen, dass die Kochfeldvorrichtung zumindest einen weiteren variablen Kochflächenbereich, der durch eine Anordnung von zumindest zwei länglichen Heizelementen festgelegt ist, deren Längsachsen zumindest im Wesentlichen parallel zu den Längsachsen der Heizelemente des variablen Kochflächenbereichs ausgerichtet sind und zumindest eine Steuereinheit aufweist, die dazu vorgesehen ist, die weitere Heizeinheit in Abhängigkeit von zumindest einem Betriebsparameter einem der variablen Kochflächenbereiche zuzuordnen.

Unter einem "variablen Kochflächenbereich" soll insbesondere ein Kochflächenbereich verstanden werden, der dazu vorgesehen ist, zumindest eine an zumindest ein aufgestelltes Gargeschirr angepasste Kochzone zu bilden. Insbesondere unterscheidet sich der variable Kochflächenbereich von einer Kochfläche, bei der Heizzonen, insbesondere durch Markierungen auf der Kochfläche, fest vorgegeben sind. Insbesondere ist der variable Kochflächenbereich von zumindest zwei, insbesondere von zumindest drei, vorteilhaft von zumindest vier Heizelementen gebildet. Insbesondere sind die den variablen Kochflächenbereich ausbildenden Heizelemente in einer einzelnen Reihe angeordnet. Unter einer "Reihe" soll insbesondere eine Zeile und/oder eine Spalte und/oder ein Streifen verstanden werden. Insbesondere sind die Heizelemente entlang einer die Heizelemente verbindenden Reihenlängsrichtung, die insbesondere als eine Gerade ausgebildet ist, aneinander angeordnet, insbesondere aufgereiht. Insbesondere verbindet die Reihenlängsrichtung Schwerpunkte der Heizelemente. Ebenfalls denkbar ist, dass die Heizelemente versetzt angeordnet sind, wobei Schwerpunkte der Heizelemente zu einer Geraden, die zumindest im Wesentlichen parallel zu der Reihenlängsrichtung ausgerichtet ist und die die Heizelemente zumindest im Wesentlichen mittig miteinander verbindet, einen Abstand aufweisen, der kleiner ist als 50 %, insbesondere kleiner als 40 %, vorteilhaft kleiner als 30 % eines Betrags zumindest einer Erstreckung, insbesondere einer Längserstreckung und/oder einer Quererstreckung, zumindest eines der die Reihe ausbildenden Heizelemente. Unter einer "einzelnen" Reihe aus zumindest zwei Heizelementen soll insbesondere eine Reihe verstanden werden, bei welcher die Heizelemente in, insbesondere genau, einer Reihenlängsrichtung benachbart angeordnet sind, wobei die Steuereinheit dazu vorgesehen ist, lediglich aus den in Reihenlängsrichtung benachbart angeordneten Heizelementen zumindest eine an zumindest ein aufgestelltes Gargeschirr angepasste Kochzone zu bilden. Insbesondere ist zumindest ein zusätzliches Heizelement, das von den die Reihe ausbildenden Heizelementen getrennt ausgebildet und Teil einer von der Reihe getrennt ausgebildeten zusätzlichen Reihe ist, zu jedem der die Reihe ausbildenden Heizelemente beabstandet angeordnet. Insbesondere weist das zusätzliche Heizelement zu jedem der die Reihe ausbildenden Heizelemente bezüglich einer Reihenquerrichtung, die zumindest im Wesentlichen senkrecht zu der Reihenlängsrichtung ausgerichtet ist, einen Abstand auf, der größer ist als 15 %, insbesondere größer als 30 %, vorteilhaft größer als 40 %, bevorzugt größer als 50 %, besonders bevorzugt größer als 75 % eines Betrags zumindest einer Erstreckung, insbesondere einer Längserstreckung und/oder einer Quererstreckung, zumindest eines der die Reihe ausbildenden Heizelemente. Unter der Wendung, dass eine Gerade und/oder Ebene "zumindest im Wesentlichen senkrecht" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene bei einer Projektion auf zumindest eine Projektionsebene, in der zumindest eine der Geraden und/oder einer der Ebenen angeordnet ist, einen Winkel einschließt, der vorzugsweise um weniger als 15°, vorteilhaft um weniger als 10° und insbesondere um weniger als 5° von einem Winkel von 90° abweicht. Alternativ oder zusätzlich ist denkbar, dass zumindest ein Teil der Heizelemente ein klassisches Kochfeld ausbildet. Ebenfalls denkbar ist, dass ein Teil einer Kochfläche als klassisches Kochfeld, ein Teil von zumindest einem weiteren Heizelement und ein weiterer Teil der Kochfläche als variabler Kochflächenbereich ausgebildet sind. Unter einem "Heizelement" soll insbesondere ein Element verstanden werden, das dazu vorgesehen ist, zumindest in einem Betriebsmodus elektrische Energie zumindest zu einem Großteil an ein Gargeschirr, vorzugsweise durch zumindest einen eine Kochfläche ausbildenden Grundkörper hindurch, zu übertragen und/oder elektrische Energie in Wärme umzuwandeln, um insbesondere zumindest ein aufgestelltes Gargeschirr, vorzugsweise durch zumindest einen eine Kochfläche ausbildenden Grundkörper hindurch, zu erhitzen. Insbesondere ist das Heizelement dazu vorgesehen, in zumindest einem Betriebsmodus, in dem das Heizelement an eine Versorgungselektronik angeschlossen ist, eine Leistung von zumindest 100 W, insbesondere zumindest 500 W, vorteilhaft zumindest 1000 W, vorzugsweise zumindest 2000 W zu übertragen. Insbesondere ist das Heizelement als ein Induktionsheizelement ausgebildet. Unter einem "Induktionsheizelement" soll insbesondere ein gewickelter elektrischer Leiter verstanden werden, der in zumindest einem Betriebsmodus von hochfrequentem Wechselstrom durchflossen ist. Insbesondere ist das Induktionsheizelement dazu vorgesehen, elektrische Energie in ein magnetisches Wechselfeld umzuwandeln, das dazu vorgesehen ist, in einem metallischen, vorzugsweise zumindest teilweise ferromagnetischen, Gargeschirr Wirbelströme und/oder Ummagnetisierungseffekte hervorzurufen, die in Wärme umgewandelt werden. Vorzugsweise ist das Induktionsheizelement dazu vorgesehen, eine Erwärmung des Gargeschirrs zu verursachen. Vorzugsweise ist das Induktionsheizelement dazu vorgesehen, in dem Betriebsmodus elektrische Energie in elektromagnetische Feldenergie zu wandeln, die in einem geeigneten Gargeschirr letztendlich in Wärme gewandelt wird. Vorteilhaft umfasst die Kochfeldvorrichtung zumindest eine Versorgungselektronik zumindest zu einer Versorgung der Heizelemente. Insbesondere umfasst die Versorgungselektronik zumindest einen, insbesondere zumindest zwei, vorteilhaft zumindest drei, vorzugsweise zumindest vier Heizfrequenzeinheiten zu einer Versorgung zumindest eines Heizelements. Insbesondere ist eine Heizfrequenzeinheit der Versorgungselektronik zu einer Versorgung von zwei, insbesondere nebeneinander angeordneten Heizelementen vorgesehen. Unter einer "Heizfrequenzeinheit" soll insbesondere eine elektrische Einheit verstanden werden, die ein oszillierendes elektrisches Signal, vorzugsweise mit einer Frequenz von zumindest 1 kHz, insbesondere von wenigstens 10 kHz, vorteilhaft von mindestens 20 kHz und insbesondere von maximal 100 kHz für ein Heizelement erzeugt. Insbesondere ist die Heizfrequenzeinheit dazu vorgesehen, eine, von dem Heizelement geforderte, maximale elektrische Leistung von zumindest 1000 W, insbesondere zumindest 2000 W, vorteilhaft zumindest 3000 W und vorzugsweise zumindest 3500 W bereitzustellen. Die Heizfrequenzeinheit umfasst insbesondere zumindest einen Wechselrichter, der vorzugsweise zumindest zwei, vorzugsweise in Reihe geschaltete, bidirektionale unipolare Schalter, die insbesondere von einem Transistor und einer parallel geschalteten Diode gebildet sind, und besonders vorteilhaft zumindest jeweils einen parallel zu den bidirektionalen unipolaren Schaltern geschaltete Dämpfungskapazität, die insbesondere von zumindest einem Kondensator gebildet ist, aufweist. Insbesondere weist die Kochfeldvorrichtung zumindest einen Grundkörper zumindest zu einem Aufstellen von Gargeschirr auf. Insbesondere bildet der Grundkörper zumindest im Wesentlichen eine Kochfläche aus. Unter einem "länglichen" Heizelement soll insbesondere ein Heizelement verstanden werden, das bei einer Betrachtung einer Projektion des Heizelements in eine Ebene, insbesondere in eine von dem Grundkörper ausgebildete Kochfläche, die vorteilhaft von dem Grundkörper ausgebildet ist, zumindest eine Längserstreckung aufweist, die größer ist als eine Quererstreckung des Heizelements. Insbesondere ist die Längserstreckung des Heizelements um einen Faktor von mehr als 1,2, vorzugsweise um einen Faktor von mehr als 1,5 und insbesondere um einen Faktor von mehr als 1,8 größer als die Quererstreckung des Heizelements. Vorzugsweise ist die Längserstreckung des Heizelements um einen Faktor von weniger als 3, vorzugsweise um einen Faktor von weniger als 2,5 und insbesondere um einen Faktor von weniger als 2,3 größer als die Quererstreckung des Heizelements. Unter einer "Längserstreckung" zumindest eines Elements, insbesondere des Heizelements, soll insbesondere eine Erstreckung einer langen Seite eines kleinsten gedachten das Element umschließenden Rechtecks verstanden werden. Unter einer "Quererstreckung" zumindest eines Elements, insbesondere des Heizelements, soll insbesondere eine Erstreckung einer kurzen Seite eines kleinsten gedachten das Element umschließenden Rechtecks verstanden werden. Unter einer "Längsachse" zumindest eines Elements, insbesondere des Heizelements, soll insbesondere eine Achse verstanden werden, die zumindest im Wesentlichen parallel zu einer langen Seite eines kleinsten gedachten das Element umschließenden Rechtecks ausgerichtet ist. Unter der Wendung, dass eine Gerade und/oder Ebene "zumindest im Wesentlichen parallel" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der vorzugsweise um weniger als 15°, vorteilhaft um weniger als 10° und insbesondere um weniger als 5° von einem Winkel von 0° abweicht. Unter der Wendung, dass die Heizelemente bezüglich zumindest einer Längsachse der Heizelemente "benachbart" angeordnet sind, soll insbesondere verstanden werden, dass die Heizelemente bezüglich zumindest einer ersten Richtung, die zumindest im Wesentlichen senkrecht zu einer Längsachse zumindest eines der Heizelemente, vorzugsweise zu einer Längsachse eines jeden der Heizelemente, ausgerichtet ist, benachbart angeordnet sind. Unter einer "Heizeinheit" soll insbesondere eine Einheit mit zumindest einem Heizelement verstanden werden. Insbesondere werden in einem Betriebszustand, in dem die Heizeinheit mit Strom versorgt wird, alle Heizelemente der Heizeinheit, vorzugsweise gleichzeitig, mit Strom versorgt. Insbesondere ist die Heizeinheit durch eine Anordnung und/oder Geometrie des zumindest einen Heizelements festgelegt, insbesondere definiert und/oder ausgestaltet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung können insbesondere geringe Kosten und/oder eine hohe Flexibilität erreicht werden. Vorteilhaft kann, insbesondere mittels lediglich einer zusätzlichen Heizeinheit, ein großer Kochflächenbereich erreicht werden, insbesondere unter Vermeidung einer wesentlichen Erhöhung einer Anzahl an Heizelementen und/oder Heizeinheiten. Insbesondere können große Gargeschirre, vorteilhaft bis zu einem Durchmesser von zumindest im Wesentlichen 300 mm, problemlos beheizt werden. Insbesondere kann ein Gargeschirr flexibel auf einem großen Kochflächenbereich aufgestellt werden. Insbesondere können Gargeschirre beheizt werden, deren Durchmesser und/oder Erstreckung größer ist als eine Erstreckung der Heizelemente. Insbesondere kann eine preiswerte und/oder flexible Ausgestaltung erreicht werden.

Ein Schwerpunkt der weiteren Heizeinheit ist bezüglich der Längsachse der weiteren Heizeinheit zwischen Schwerpunkten von zwei benachbart angeordneten Heizelementen des variablen Kochflächenbereichs angeordnet. Insbesondere ist der Schwerpunkt der weiteren Heizeinheit bezüglich der Längsachse der weiteren Heizeinheit zumindest im Wesentlichen mittig zwischen Schwerpunkten von zwei benachbart angeordneten Heizelementen des variablen Kochflächenbereichs angeordnet. Insbesondere ist die weitere Heizeinheit bei Betrachtung einer Projektion von Heizelementen des variablen Kochflächenbereichs auf die Längsachse der weiteren Heizeinheit in zumindest zwei Bereichen, die jeweils von einem Heizelement des variablen Kochflächenbereichs aufgespannt sind, jeweils zumindest teilweise, insbesondere zumindest größtenteils, vorteilhaft komplett, angeordnet. Insbesondere ist die weitere Heizeinheit in direkter Verlängerung der beiden Heizelemente des variablen Kochflächenbereichs angeordnet.

Unter einem "Schwerpunkt" einer Heizeinheit soll insbesondere eine Projektion eines Schwerpunkts der Heizeinheit auf zumindest eine Ebene, insbesondere auf eine Kochfläche, die vorzugsweise durch den Grundkörper gebildet ist, verstanden werden. Dadurch kann insbesondere eine vorteilhafte Wärmeverteilung erreicht werden.

Zudem wird vorgeschlagen, dass der variable Kochflächenbereich durch eine Anordnung von zumindest drei länglichen Heizelementen festgelegt ist und dass bei Betrachtung einer Projektion von Heizelementen des variablen Kochflächenbereichs auf die Längsachse der weiteren Heizeinheit die weitere Heizeinheit in zumindest drei Bereichen, die jeweils von einem Heizelement des variablen Kochflächenbereichs aufgespannt sind, jeweils zumindest teilweise angeordnet ist. Insbesondere ist die weitere Heizeinheit in zwei der drei Bereiche zu einem Anteil von mehr als 15 %, insbesondere von mehr als 25 %, vorteilhaft von mehr als 30 % angeordnet. Insbesondere ist die weitere Heizeinheit in zwei der drei Bereiche zu einem Anteil von weniger als 90 %, insbesondere von weniger als 80 %, vorteilhaft von weniger als 70 % angeordnet. Insbesondere ist ein Schwerpunkt der weiteren Heizeinheit bezüglich der Längsachse der weiteren Heizeinheit in einem Bereich einer Quererstreckung eines der Heizelemente des variablen Kochflächenbereichs angeordnet. Insbesondere ist der Schwerpunkt der weiteren Heizeinheit zumindest im Wesentlichen auf einer der Längsachsen eines der Heizelemente des variablen Kochflächenbereichs angeordnet. Dadurch kann vorteilhaft, insbesondere mittels lediglich einer zusätzlichen Heizeinheit, ein großer Kochflächenbereich erreicht werden, insbesondere unter Vermeidung einer wesentlichen Erhöhung einer Anzahl an Heizelementen und/oder Heizeinheiten.

Die Kochfeldvorrichtung weist zumindest einen weiteren variablen Kochflächenbereich auf, der durch eine Anordnung von zumindest zwei länglichen Heizelementen festgelegt ist, deren Längsachsen zumindest im Wesentlichen parallel zu den Längsachsen der Heizelemente des variablen Kochflächenbereichs ausgerichtet sind. Insbesondere bilden der variable Kochflächenbereich, der weitere variable Kochflächenbereich und die weitere Heizeinheit gemeinsam eine Kochfläche aus. Dadurch kann insbesondere eine flexible Ausgestaltung und/oder eine große Kochfläche erreicht werden.

Ferner wird vorgeschlagen, dass die Kochfeldvorrichtung zumindest eine Steuereinheit aufweist, die dazu vorgesehen ist, die weitere Heizeinheit in Abhängigkeit von zumindest einem Betriebsparameter, insbesondere zumindest einer Gargeschirr-Belegung und/oder einer Bedieneingabe mittels einer Bedieneinheit, einem der variablen Kochflächenbereiche zuzuordnen. Alternativ sind weitere, einem Fachmann als sinnvoll erscheinende Betriebsparameter denkbar. Beispielsweise könnte der Betriebsparameter als Auslastung der Versorgungselektronik, die insbesondere zu einer Versorgung zumindest eines variablen Kochflächenbereichs vorgesehen ist, und/oder einer Voreinstellung, insbesondere in einer Speichereinheit der Steuereinheit, ausgebildet sein. Ebenfalls denkbar ist, dass die Kochfeldvorrichtung zumindest zwei weitere längliche Heizeinheiten aufweist, wobei jedem der variablen Kochflächenbereiche eine der weiteren Heizeinheiten zugeordnet ist. Beispielsweise könnten die weiteren Heizeinheiten bezüglich einer zumindest im Wesentlichen senkrecht zu zumindest einer, insbesondere zu jeder, der Längsachsen der weiteren Heizeinheiten ausgerichteten ersten Richtung nebeneinander angeordnet sein. Alternativ könnten die weiteren Heizeinheiten bezüglich einer zumindest im Wesentlichen parallel zu zumindest einer, insbesondere zu jeder, der Längsachsen der weiteren Heizeinheiten ausgerichteten zweiten Richtung nebeneinander angeordnet sein, wobei beispielsweise eine der weiteren Heizeinheiten in einem in eingebautem Zustand einem Bediener zuweisenden Bereich und eine der weiteren Heizeinheiten in einem in eingebautem Zustand einem Bediener abweisenden Bereich angeordnet wäre. Unter einer "Steuereinheit" soll insbesondere eine elektronische Einheit verstanden werden, die vorzugsweise in einer Steuer- und/oder Regeleinheit eines Kochfelds zumindest teilweise integriert ist und die vorzugsweise dazu vorgesehen ist, zumindest die Heizelemente zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Vorteilhaft weist die Kochfeldvorrichtung zumindest eine Sensoreinheit auf, die insbesondere von den Heizelementen selbst gebildet ist, die dazu vorgesehen ist, aufgestellte Gargeschirre insbesondere mittels Messung zumindest einer Induktivität und/oder zumindest einer Kapazität zu detektieren. Insbesondere ist die Steuereinheit dazu vorgesehen, Messwerte der Sensoreinheit auszuwerten, zumindest eine Heizzone zu berechnen und Heizelemente festzulegen, die diese Heizzone bilden. Insbesondere ist Steuereinheit dazu vorgesehen, einem detektierten Gargeschirr eine in Form, Größe und/oder Position angepasste Heizzone zuzuordnen. Dadurch kann insbesondere eine flexible und/oder energiesparende Ausgestaltung erreicht werden. Zudem kann vorteilhaft Flicker und/oder Intermodulationsbrummen vermieden werden. Weiterhin kann ein hoher Komfort für einen Bediener, der insbesondere über eine Bedieneingabe mittels der Bedieneinheit eine Zuordnung der weiteren Heizeinheit zu einem der variablen Kochflächenbereiche vornehmen kann, erreicht werden.

Zudem wird vorgeschlagen, dass die weitere Heizeinheit zumindest im Wesentlichen, insbesondere zu einem Massen- und/oder Volumenanteil von mehr als 90 %, vorteilhaft komplett, zwischen den variablen Kochflächenbereichen angeordnet ist. Insbesondere ist die Längsachse der weiteren Heizeinheit zumindest im Wesentlichen parallel zu der Reihenlängsrichtung, in der die den variablen Kochflächenbereich ausbildenden Heizelemente angeordnet sind, und/oder zu einer weiteren Reihenlängsrichtung, in der die den weiteren variablen Kochflächenbereich ausbildenden Heizelemente angeordnet sind, ausgerichtet. Insbesondere existiert zumindest eine kürzeste Gerade, die die beiden variablen Kochflächenbereiche verbindet und die Längsachse der weiteren Heizeinheit, insbesondere zumindest im Wesentlichen senkrecht, schneidet. Insbesondere weist die weitere Heizeinheit zu zumindest einem der variablen Kochflächenbereiche einen Abstand auf, der kleiner ist als 25 %, insbesondere kleiner als 15 %, vorteilhaft kleiner als 10 %, vorzugsweise kleiner als 5 %, vorteilhaft kleiner als 3 % eines Betrags zumindest einer Erstreckung, insbesondere einer Längserstreckung und/oder einer Quererstreckung, zumindest eines der Heizelemente der variablen Kochflächenbereiche. Insbesondere weist die weitere Heizeinheit zu zumindest einem der variablen Kochflächenbereichen einen Abstand auf, der kleiner ist als 5 cm, insbesondere kleiner als 3 cm, vorteilhaft kleiner als 2cm, insbesondere kleiner als 1 cm. Unter einem "Abstand" zwischen der Heizeinheit und einem der variablen Kochflächenbereiche soll insbesondere eine kürzeste Strecke verstanden werden, die bei Betrachtung einer Projektion auf zumindest eine Ebene, insbesondere auf eine Kochfläche, ein kleinstes die Heizeinheit umschließendes Rechteck und ein kleinstes den variablen Kochflächenbereich umschließendes Rechteck verbindet. Dadurch kann insbesondere eine flexible Ausgestaltung und/oder eine vorteilhafte Wärmeverteilung erreicht werden. Zudem kann vorteilhaft eine symmetrische Ausgestaltung erreicht werden.

Die weitere Heizeinheit ist von genau einem Heizelement gebildet. Insbesondere ist das die weitere Heizeinheit bildende Heizelement zumindest im Wesentlichen gleich ausgebildet wie ein Heizelement eines der variablen Kochflächenbereiche. Dadurch kann insbesondere eine preiswerte Ausgestaltung erreicht werden.

Zudem wird vorgeschlagen, dass die weitere Heizeinheit von zumindest zwei Heizelementen gebildet ist. Insbesondere ist die weitere Heizeinheit von zumindest zwei in Reihe geschalteten Heizelementen gebildet. Insbesondere ist die weitere Heizeinheit von zumindest zwei parallel geschalteten Heizelementen gebildet. Insbesondere ist die weitere Heizeinheit von zumindest zwei, insbesondere zumindest im Wesentlichen kreisrunden Heizelementen gebildet, die zusammen die weitere, längliche Heizeinheit ausbilden, insbesondere zumindest eine Geometrie der weiteren länglichen Heizeinheit ausformen. Alternativ ist denkbar, dass die die weitere Heizeinheit ausbildenden Heizelemente separat ausgebildet sind, insbesondere einzeln ansteuerbar und/oder betreibbar sind. Dadurch kann insbesondere eine flexible Ausgestaltung erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Kochfeld mit einer erfindungsgemäßen Kochfeldvorrichtung in einer schematischen Draufsicht,
- Fig. 2: eine alternative Ausgestaltung des erfindungsgemäßen Kochfelds mit der erfindungsgemäßen Kochfeldvorrichtung aus Fig. 1 in einer schematischen Draufsicht und
- Fig. 3: ein weiteres Ausführungsbeispiel eines Kochfelds mit einer nicht erfindungsgemäßen Kochfeldvorrichtung in einer schematischen Draufsicht.

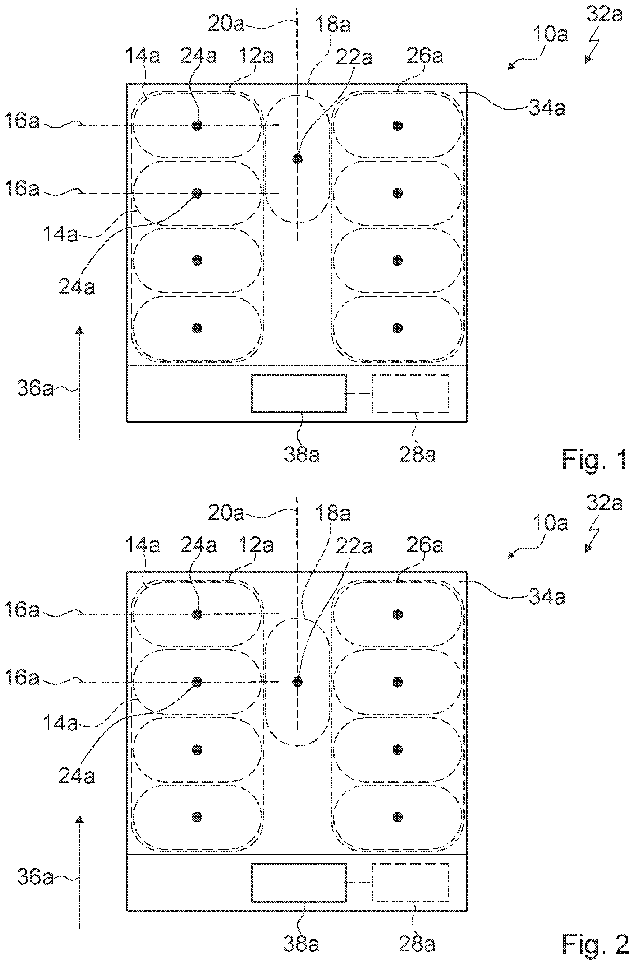

Fig. 1 zeigt ein erfindungsgemäßes Kochfeld 32a, das als ein Induktionskochfeld ausgebildet ist, mit einer erfindungsgemäßen Kochfeldvorrichtung 10a, die als eine Induktionskochfeldvorrichtung ausgebildet ist. Die Kochfeldvorrichtung 10a weist in einem in eingebautem Zustand einem Bediener zuweisenden Bereich eine Bedieneinheit 38a zu einer Eingabe von Betriebsparametern auf. Beispielsweise ist die Bedieneinheit zu einer Auswahl und/oder Veränderung einer Heizzone vorgesehen. Zudem könnte die Bedieneinheit zu einer Einstellung einer Heizleistung und/oder Heizleistungsdichte einer Heizzone vorgesehen sein. Ebenfalls denkbar ist, dass die Bedieneinheit zu einer Auswahl und/oder Veränderung einer Garzeit und/oder eines Garprogramms ausgebildet ist. Weiterhin ist denkbar, dass die Bedieneinheit zu einem Wechsel eines Betriebsmodus und/oder Betriebszustands vorgesehen ist. Alternativ sind weitere, einem Fachmann als sinnvoll erscheinende Ausbildungen der Bedieneinheit und/oder des Betriebsparameters denkbar. In dem in eingebautem Zustand einem Bediener zuweisenden Bereich umfasst die Kochfeldvorrichtung 10a eine Steuereinheit 28a. Die Steuereinheit 28a ist dazu vorgesehen, in Abhängigkeit der mittels der Bedieneinheit 38a eingegebenen Betriebsparameter Aktionen auszuführen und/oder Einstellungen zu verändern.

Die Kochfeldvorrichtung 10a weist einen Grundkörper 34a zu einem Aufstellen von Gargeschirren auf. Der Grundkörper 34a bildet eine Kochfläche aus. Die Kochfeldvorrichtung 10a umfasst einen variablen Kochflächenbereich 12a, der durch eine Anordnung von vier länglichen Heizelementen 14a festgelegt ist. In Fig. 1 bis 3 ist der Übersichtlichkeit halber jeweils nur eines von mehrfach vorhandenen Bauteilen mit einem Bezugszeichen versehen. Die länglichen Heizelemente 14a sind bezüglich einer Längsachse 16a der Heizelemente 14a benachbart angeordnet. Die Kochfeldvorrichtung 10a umfasst einen weiteren variablen Kochflächenbereich 26a. Der weitere variable Kochflächenbereich 26a ist durch eine Anordnung von vier länglichen Heizelementen 14a festgelegt, deren Längsachsen 16a im Wesentlichen parallel zu den Längsachsen 16a der Heizelemente 14a des variablen Kochflächenbereichs 12a ausgerichtet sind.

Die Heizelemente 14a, die als Induktionsheizelemente ausgebildet sind, sind unterhalb des Grundkörpers 34a angeordnet. Die Heizelemente 14a sind jeweils dazu vorgesehen, auf dem Grundkörper 34a oberhalb der Heizelemente 14a aufgestelltes Gargeschirr zu erhitzen. Die den variablen Kochflächenbereich 12a ausbildenden Heizelemente 14a sind in einer einzelnen Reihe angeordnet. In analoger Weise sind die den weiteren variablen Kochflächenbereich 26a ausbildenden Heizelemente 14a in einer einzelnen Reihe angeordnet. Jeweils vier der Heizelemente 14a, die gemeinsam die einzelne Reihe ausbilden, sind bezüglich einer Reihenlängsrichtung 36a hintereinander angeordnet. Die Reihenlängsrichtung 36a ist im Wesentlichen senkrecht zu der Längsachse 16a der Heizelemente 14a ausgerichtet. Die Reihenlängsrichtung 36a erstreckt sich ausgehend von dem in eingebautem Zustand einem Bediener zugewandten Bereich des Grundkörpers 34a in Richtung eines in eingebautem Zustand einem Bediener abgewandten Bereichs des Grundkörpers 34a. Die die einzelne Reihe ausbildenden Heizelemente 14a weisen bezüglich der Reihenlängsrichtung 36a einen Abstand auf, der wesentlich kleiner ist als die im Wesentlichen parallel zu der Reihenlängsrichtung 36a ausgerichtete Quererstreckung der Heizelemente 14a.

Die Kochfeldvorrichtung 10a umfasst eine weitere längliche Heizeinheit 18a, deren Längsachse 20a im Wesentlichen senkrecht zu den Längsachsen 16a der Heizelemente 14a ausgerichtet ist. Hierbei ist die Längsachse 20a der weiteren Heizeinheit 18a im Wesentlichen senkrecht zu den Längsachsen 16a der Heizelemente 14a des variablen Kochflächenbereichs 12a und des weiteren variablen Kochflächenbereichs 26a ausgerichtet. Die weitere Heizeinheit 18a ist von genau einem Heizelement 14a gebildet. Das die weitere Heizeinheit 18a ausbildende Heizelement 14a ist im Wesentlichen gleich ausgebildet wie ein Heizelement 14a des variablen Kochflächenbereichs 12a. Eine Anordnung des die weitere Heizeinheit 18a ausbildenden Heizelements 14a ist im Wesentlichen senkrecht zu einer Anordnung eines Heizelements 14a des variablen Kochflächenbereichs 12a.

Die weitere Heizeinheit 18a ist im Wesentlichen zwischen den variablen Kochflächenbereichen 12a, 26a angeordnet. Die weitere Heizeinheit 18a ist in dem in eingebautem Zustand einem Bediener abgewandten Bereich des Grundkörpers 34a angeordnet. Ein Schwerpunkt 22a der weiteren Heizeinheit 18a ist bezüglich der Längsachse 20a der weiteren Heizeinheit 18a zwischen Schwerpunkten 24a von zwei benachbart angeordneten Heizelementen 14a des variablen Kochflächenbereichs 12a angeordnet (vgl. Fig. 1). Die weitere Heizeinheit 18a ist bei Betrachtung einer Projektion von Heizelementen 14a des variablen Kochflächenbereichs 12a auf die Längsachse 20a der weiteren Heizeinheit 18a in zwei Bereichen, die jeweils von einem Heizelement 14a des variablen Kochflächenbereichs 12a aufgespannt sind, jeweils teilweise angeordnet. Der Schwerpunkt 22a der weiteren Heizeinheit 18a ist im Wesentlichen mittig zwischen Schwerpunkten 24a von zwei benachbart angeordneten Heizelementen 14a des variablen Kochflächenbereichs 12a angeordnet. Hierbei bildet der Schwerpunkt 22a der weiteren Heizeinheit 18a mit einer gedachten Verbindungslinie zwischen den Schwerpunkten 24a der beiden benachbarten Heizelemente 14a des variablen Kochflächenbereichs 12a ein im Wesentlichen gleichschenkliges Dreieck aus.

Alternativ könnte die weitere Heizeinheit 18a wie in Fig. 2 gezeigt angeordnet sein. Der Schwerpunkt 22a der weiteren Heizeinheit 18a ist bezüglich der Längsachse 20a der weiteren Heizeinheit 18a in einem Bereich einer Quererstreckung eines der Heizelemente 14a des variablen Kochflächenbereichs 12a angeordnet. Der Schwerpunkt 22a der weiteren Heizeinheit 18a ist im Wesentlichen auf einer der Längsachse 16a eines der Heizelemente 14a des variablen Kochflächenbereichs 12a angeordnet. Die weitere Heizeinheit 18a ist bei Betrachtung einer Projektion von Heizelementen 14a des variablen Kochflächenbereichs 12a auf die Längsachse 20a der weiteren Heizeinheit 18a in drei Bereichen, die jeweils von einem Heizelement 14a des variablen Kochflächenbereichs 12a aufgespannt sind, jeweils teilweise angeordnet. Hierbei ist die weitere Heizeinheit 18a in einem ersten und einem dritten der Bereiche zu jeweils im Wesentlichen 50 % angeordnet. In einem zweiten der Bereiche, der im Wesentlichen mittig zwischen dem ersten und dem dritten der Bereiche angeordnet ist, ist die weitere Heizeinheit 18a komplett angeordnet (vgl. Fig. 2).

In einem Verfahren zum Betrieb der Kochfeldvorrichtung 10a ordnet die Steuereinheit 28a die weitere Heizeinheit 18a in Abhängigkeit von verschiedenen Betriebsparametern einem der variablen Kochflächenbereiche 12a, 26a zu. Die Steuereinheit 28a ordnet in Abhängigkeit einer Gargeschirr-Belegung die weitere Heizeinheit 18a einem der variablen Kochflächenbereiche 12a, 26a zu. Bei einer Belegung von zwei benachbarten Heizelementen 14a des variablen Kochflächenbereichs 12a und der weiteren Heizeinheit 18a durch ein einziges aufgestelltes Gargeschirr ordnet die Steuereinheit 28a die weitere Heizeinheit 18a dem variablen Kochflächenbereich 12a zu. Bei einer Belegung von zwei benachbarten Heizelementen 14a des weiteren variablen Kochflächenbereichs 26a und der weiteren Heizeinheit 18a durch ein einziges aufgestelltes Gargeschirr ordnet die Steuereinheit 28a die weitere Heizeinheit 18a dem weiteren variablen Kochflächenbereich 26a zu. Im Falle einer Bedieneingabe mittels der Bedieneinheit 38a ordnet die Steuereinheit 28a die weitere Heizeinheit 18a in Abhängigkeit der Bedieneingabe mittels der Bedieneinheit 38a einem der variablen Kochflächenbereiche 12a, 26a zu.

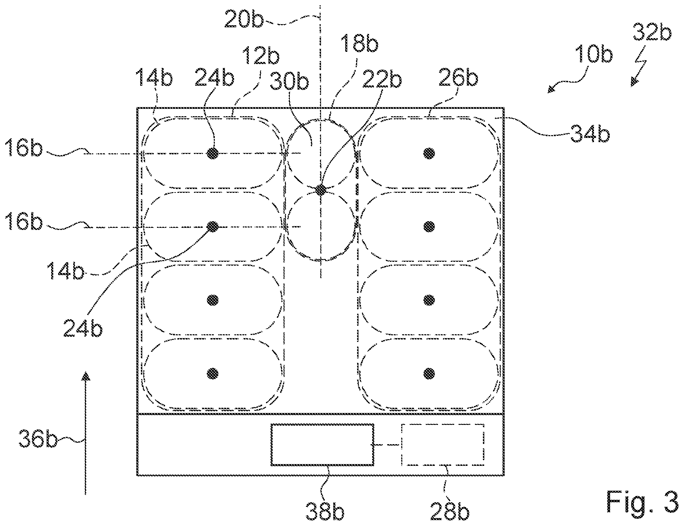

In Fig. 3 ist ein weiteres Ausführungsbeispiel gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 2 verwiesen werden kann. Zur Unterscheidung der Ausführungsbeispiele ist der Buchstabe a in den Bezugszeichen des Ausführungsbeispiels in den Fig. 1 bis 2 durch den Buchstaben b in den Bezugszeichen des Ausführungsbeispiels der Fig. 3 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 2 verwiesen werden.

Fig. 3 zeigt ein Kochfeld 32b, das als ein Induktionskochfeld ausgebildet ist, mit einer nicht erfindungsgemäßen Kochfeldvorrichtung 10b, die als eine Induktionskochfeldvorrichtung ausgebildet ist. Die Kochfeldvorrichtung 10b umfasst einen variablen Kochflächenbereich 12b, der durch eine Anordnung von vier länglichen Heizelementen 14b festgelegt ist. Die länglichen Heizelemente 14b sind bezüglich einer Längsachse 16b der Heizelemente 14b benachbart angeordnet. Die Kochfeldvorrichtung 10b umfasst einen weiteren variablen Kochflächenbereich 26b. Der weitere variable Kochflächenbereich 26b ist durch eine Anordnung von vier länglichen Heizelementen 14b festgelegt, deren Längsachsen 16b im Wesentlichen parallel zu den Längsachsen 16b der Heizelemente 14b des variablen Kochflächenbereichs 12b ausgerichtet sind.

Die Heizelemente 14b, die als Induktionsheizelemente ausgebildet sind, sind unterhalb eines Grundkörpers 34b angeordnet. Die Heizelemente 14b sind jeweils dazu vorgesehen, auf dem Grundkörper 34b oberhalb der Heizelemente 14b aufgestelltes Gargeschirr zu erhitzen. Die den variablen Kochflächenbereich 12b ausbildenden Heizelemente 14b sind in einer einzelnen Reihe angeordnet. In analoger Weise sind die den weiteren variablen Kochflächenbereich 26b ausbildenden Heizelemente 14b in einer einzelnen Reihe angeordnet. Jeweils vier der Heizelemente 14b, die gemeinsam die einzelne Reihe ausbilden, sind bezüglich einer Reihenlängsrichtung 36b hintereinander angeordnet.

Die Kochfeldvorrichtung 10b umfasst eine weitere längliche Heizeinheit 18b, deren Längsachse 20b im Wesentlichen senkrecht zu den Längsachsen 16b der Heizelemente 14b ausgerichtet ist. Hierbei ist die Längsachse 20b der weiteren Heizeinheit 18a im Wesentlichen senkrecht zu den Längsachsen 16b der Heizelemente 14b des variablen Kochflächenbereichs 12b und des weiteren variablen Kochflächenbereichs 26b ausgerichtet. Die weitere Heizeinheit 18b ist von zwei Heizelementen 30a gebildet. Die weitere Heizeinheit 18b ist von zwei in Reihe geschalteten Heizelementen 30a gebildet.

Die die weitere Heizeinheit 18b ausbildenden Heizelemente 30b sind im Wesentlichen kreisrund ausgebildet. Die die weitere Heizeinheit 18b ausbildenden Heizelemente 30b formen gemeinsam eine Geometrie der länglichen weiteren Heizeinheit 18b aus. Bezüglich der Reihenlängsrichtung 36b sind die die weitere Heizeinheit 18b ausbildenden Heizelemente 30b hintereinander angeordnet.

Die weitere Heizeinheit 18b ist im Wesentlichen zwischen den variablen Kochflächenbereichen 12b, 26b angeordnet. Die weitere Heizeinheit 18b ist in dem in eingebautem Zustand einem Bediener abgewandten Bereich des Grundkörpers 34b angeordnet. Die weitere Heizeinheit 18b ist bei Betrachtung einer Projektion von Heizelementen 14b des variablen Kochflächenbereichs 12b auf die Längsachse 20b der weiteren Heizeinheit 18b in zwei Bereichen, die jeweils von einem Heizelement 14b des variablen Kochflächenbereichs 12b aufgespannt sind, jeweils teilweise angeordnet. Ein Schwerpunkt 22b der weiteren Heizeinheit 18b ist bezüglich der Längsachse 20b der weiteren Heizeinheit 18b zwischen Schwerpunkten 24b von zwei benachbart angeordneten Heizelementen 14b des variablen Kochflächenbereichs 12b angeordnet. Eine derartige Anordnung entspricht einer in Fig. 1 des ersten Ausführungsbeispiels gezeigten Anordnung.

Die weitere Heizeinheit 18b könnte ebenfalls wie in Fig. 2 des ersten Ausführungsbeispiels gezeigt angeordnet sein. Hierbei ist der Schwerpunkt 22b der weiteren Heizeinheit 18b bezüglich der Längsachse 20b der weiteren Heizeinheit 18b in einem Bereich einer Quererstreckung eines der Heizelemente 14b des variablen Kochflächenbereichs 12b angeordnet. Der Schwerpunkt 22b der weiteren Heizeinheit 18b ist im Wesentlichen auf einer der Längsachsen 16b eines der Heizelemente 14b des variablen Kochflächenbereichs 12b angeordnet. Die weitere Heizeinheit 18b ist bei Betrachtung einer Projektion von Heizelementen 14b des variablen Kochflächenbereichs 12b auf die Längsachse 20b der weiteren Heizeinheit 18b in drei Bereichen, die jeweils von einem Heizelement 14b des variablen Kochflächenbereichs 12b aufgespannt sind, jeweils teilweise angeordnet.

Die Kochfeldvorrichtung 10b umfasst eine Steuereinheit 28b, die die weitere Heizeinheit 18b in Abhängigkeit von verschiedenen Betriebsparametern einem der variablen Kochflächenbereiche 12b, 26b zuordnet. Ein Betriebsparameter ist als Gargeschirr-Belegung ausgebildet. Ein Betriebsparameter ist als Bedieneingabe mittels einer Bedieneinheit 38b ausgebildet.

### Bezugszeichen

- 10: Kochfeldvorrichtung
- 12: Variabler Kochflächenbereich
- 14: Heizelement
- 16: Längsachse
- 18: Weitere Heizeinheit
- 20: Längsachse
- 22: Schwerpunkt
- 24: Schwerpunkt
- 26: Weiterer variabler Kochflächenbereich
- 28: Steuereinheit
- 30: Heizelement
- 32: Kochfeld
- 34: Grundkörper
- 36: Reihenlängsrichtung
- 38: Bedieneinheit

## Patentansprüche

1. Kochfeldvorrichtung, insbesondere Induktionskochfeldvorrichtung, mit zumindest einem variablen Kochflächenbereich (12a), der durch eine Anordnung von zumindest zwei länglichen Heizelementen (14a) festgelegt ist, die bezüglich zumindest einer Längsachse (16a) der Heizelemente (14a) benachbart angeordnet sind und mit zumindest einer weiteren länglichen Heizeinheit (18a), deren Längsachse (20a) zumindest im Wesentlichen senkrecht zu den Längsachsen (16a) der Heizelemente (14a) ausgerichtet ist, wobei die weitere Heizeinheit (18a) von genau einem Heizelement (14a) gebildet ist, wobei ein Schwerpunkt (22a) der weiteren Heizeinheit (18a) bezüglich der Längsachse (20a) der weiteren Heizeinheit (18a) zumindest im Wesentlichen mittig zwischen Schwerpunkten (24a) von zwei benachbart angeordneten Heizelementen (14a) des variablen Kochflächenbereichs (12a) oder zumindest im Wesentlichen auf einer der Längsachsen (16a) eines der Heizelemente (14a) des variablen Kochflächenbereichs (12a) angeordnet ist, **gekennzeichnet durch** zumindest einen weiteren variablen Kochflächenbereich (26a), der durch eine Anordnung von zumindest zwei länglichen Heizelementen (14a) festgelegt ist, deren Längsachsen (16a) zumindest im Wesentlichen parallel zu den Längsachsen (16a) der Heizelemente (14a) des variablen Kochflächenbereichs (12a) ausgerichtet sind und **durch** zumindest eine Steuereinheit (28a), die dazu vorgesehen ist, die weitere Heizeinheit (18a) in Abhängigkeit von zumindest einem Betriebsparameter einem der variablen Kochflächenbereiche (12a, 26a) zuzuordnen.

2. Kochfeldvorrichtung nach Anspruch 1, **dadurch gekennzeichnet, dass** der variable Kochflächenbereich (12a) durch eine Anordnung von zumindest drei länglichen Heizelementen (14a) festgelegt ist und dass bei Betrachtung einer Projektion von Heizelementen (14a) des variablen Kochflächenbereichs (12a) auf die Längsachse (20a) der weiteren Heizeinheit (18a) die weitere Heizeinheit (18a) in zumindest drei Bereichen, die jeweils von einem Heizelement (14a) des variablen Kochflächenbereichs (12a) aufgespannt sind, jeweils zumindest teilweise angeordnet ist.

3. Kochfeldvorrichtung nach Anspruch 1 oder 2, **dadurch gekennzeichnet, dass** die weitere Heizeinheit (18a) zumindest im Wesentlichen zwischen den variablen Kochflächenbereichen (12a, 26a) angeordnet ist.

4. Kochfeldvorrichtung nach einem der vorhergehenden Ansprüche, **dadurch gekennzeichnet, dass** die den variablen Kochflächenbereich (12a) ausbildenden Heizelemente (14a) in einer einzelnen Reihe angeordnet sind.

5. Kochfeld, insbesondere Induktionskochfeld, mit zumindest einer Kochfeldvorrichtung (10a) nach einem der vorhergehenden Ansprüche.

## Claims

1. Hob apparatus, in particular an induction hob apparatus, having at least one variable cooking surface region (12a), which is defined by an arrangement of at least two extended heating elements (14a), which are arranged adjacent to one another relative to at least one longitudinal axis (16a) of the heating elements (14a) and having at least one further extended heating unit (18a), the longitudinal axis (20a) of which is oriented at least substantially perpendicular to the longitudinal axes (16a) of the heating elements (14a), wherein the further heating unit (18a) is formed by just one heating element (14a), wherein a centre point (22a) of the further heating unit (18a) is arranged at least substantially centrally between centre points (24a) of two adjacently arranged heating elements (14a) of the variable cooking surface region (12a) or at least substantially on one of the longitudinal axes (16a) of one of the heating elements (14a) of the variable cooking surface region (12a) relative to the longitudinal axis (20a) of the further heating unit (18a), **characterised by** at least one further variable cooking surface region (26a), which is defined by an arrangement of at least two extended heating elements (14a), the longitudinal axes (16a) of which are oriented at least substantially parallel to the longitudinal axes (16a) of the heating elements (14a) of the variable cooking surface region (12a) and by at least one control unit (28a), which is provided to assign the further heating unit (18a) to one of the variable cooking surface regions (12a, 26a) as a function of at least one operating parameter.

2. Hob apparatus according to claim 1, **characterised in that** the variable cooking surface region (12a) is defined by an arrangement of at least three extended heating elements (14a) and when viewing a projection of heating elements (14a) of the variable cooking surface region (12a) onto the longitudinal axis (20a) of the further heating unit (18a), the further heating unit (18a) is at least partially arranged in one of at least three regions, each spanned by a heating element (14a) of the variable cooking surface region (12a).

3. Hob apparatus according to claim 1 or 2, **characterised in that** the further heating unit (18a) is arranged at least substantially between the variable cooking surface regions (12a, 26a).

4. Hob apparatus according to one of the preceding claims, **characterised in that** the heating elements (14a) forming the variable cooking surface region (12a) are arranged in a single line.

5. Hob, in particular an induction hob, having at least one hob apparatus (10a) according to one of the preceding claims.

## Revendications

1. Dispositif de table de cuisson, en particulier dispositif de table de cuisson par induction, comprenant au moins une zone de surface de cuisson variable (12a), laquelle est fixée par une disposition d'au moins deux éléments chauffants longitudinaux (14a), qui sont disposés contigus par rapport à au moins un axe longitudinal (16a) des éléments chauffants (14a) et comprenant au moins une unité chauffante longitudinale supplémentaire (18a), dont l'axe longitudinal (20a) est orienté au moins pour l'essentiel à la perpendiculaire des axes longitudinaux (16a) des éléments chauffants (14a), l'unité chauffante supplémentaire (18a) étant formée exactement d'un élément chauffant (14a), un centre de gravité (22a) de l'unité chauffante supplémentaire (18a) étant disposé par rapport à l'axe longitudinal (20a) de l'unité chauffante supplémentaire (18a) au moins pour l'essentiel centralement entre les centres de gravité (24a) de deux éléments chauffants (14a) disposés contigus de la zone de surface de cuisson variable (12a) ou au moins pour l'essentiel sur l'un des axes longitudinaux (16a) d'un des éléments chauffants (14a) de la zone de surface de cuisson variable (12a), **caractérisé par** au moins une zone de surface de cuisson variable supplémentaire (26a), laquelle est fixée par une disposition d'au moins deux éléments chauffants longitudinaux (14a), dont les axes longitudinaux (16a) sont orientés au moins pour l'essentiel parallèlement aux axes longitudinaux (16a) des éléments chauffants (14a) de la zone de surface de cuisson variable (12a) et par au moins une unité de commande (28a), laquelle est prévue pour subordonner l'unité chauffante supplémentaire (18a), en fonction d'au moins un paramètre de fonctionnement, à une des zones de surface de cuisson variables (12a, 26a).

2. Dispositif de table de cuisson selon la revendication 1, **caractérisé en ce que** la zone de surface de cuisson variable (12a) est fixée par une disposition d'au moins trois éléments chauffants longitudinaux (14a) et **en ce qu'**en observant une projection d'éléments chauffants (14a) de la zone de surface de cuisson variable (12a) sur l'axe longitudinal (20a) de l'unité chauffante supplémentaire (18a), l'unité chauffante supplémentaire (18a) est disposée à chaque fois au moins en partie dans au moins trois zones, lesquelles s'étendent à chaque fois d'un élément chauffant (14a) de la zone de surface de cuisson variable (12a).

3. Dispositif de table de cuisson selon la revendication 1 ou 2, **caractérisé en ce que** l'unité chauffante supplémentaire (18a) est disposée au moins pour l'essentiel entre les zones de surface de cuisson variables (12a, 26a).

4. Dispositif de table de cuisson selon l'une des revendications précédentes, **caractérisé en ce que** les éléments chauffants (14a) constituant la zone de surface de cuisson variable (12a) sont disposés en une seule rangée.

5. Table de cuisson, en particulier table de cuisson à induction, comprenant au moins un dispositif de table de cuisson (10a) selon l'une des revendications précédentes.
